# EUROPÄISCHE PATENTSCHRIFT

(11) **EP 1 710 359 B1**
(45) Veröffentlichungstag und Bekanntmachung des Hinweises auf die Patenterteilung: **29.06.2011**
(21) Anmeldenummer: 06006487.0
(22) Anmeldetag: 29.03.2006
(51) Int. Cl.: E03B 9/08, F16K 37/00, F16K 31/46, F16K 31/528

(54) **Absperrvorrichtung mit Anzeigevorrichtung des Öffnungsgrades der Vorrichtung**
Shut-off device with an indicator showing the degree to which the device is open or shut
Dispositif d'obturation avec indication du degré d'ouverture du dispositif

(30) Priorität: 01.04.2005 DE 102005015342
(43) Veröffentlichungstag der Anmeldung: 11.10.2006
(73) Patentinhaber: KETTLER GMBH, 46286 Dorsten (DE)
(72) Erfinder: Buhla, Michael, 46348 Raesfeld (DE)
(74) Vertreter: Schulte, Jens Michael

(56) Entgegenhaltungen:
- EP-A- 0 702 178
- DE-A1-102004 016 857
- DE-U1- 20 310 741

## Beschreibung

Die Erfindung betrifft eine Auf- und Absperrvorrichtung für im Straßenunterbau verlaufende Leitungen, insbesondere Frischwasserleitungen, die über eine Schlüsselstange verfügt, die von einem mit dieser mitdrehenden Innenrohr mit einem Gewinde, sowie einem Hülsrohr umgeben ist, in welchem das Innenrohr drehbar gelagert ist und die mit einer Statusanzeige ausgerüstet ist, welche den Öffnungszustand der unterirdischen Leitungsarmatur anzeigt

Beim Aufschluss von Wohn- und Industriegebieten werden die Frostgrenze berücksichtigend im Straßenunterbau Frischwasserleitungen, Ableitungen und andere Leitungen verlegt, wobei zum Teil erst im Nachhinein die Verbindungen zu den Abnehmern hergestellt werden. Hierzu werden in regelmäßigen Abständen Auf- und Absperrvorrichtungen vorgesehen, welche die Verbindung mit den Abnehmern ermöglichen und über weiche die jeweiligen Wasserleitungen abschnittsweise stillgelegt oder geöffnet werden. Bekannt ist es hierzu, in der Straßendecke selbst so genannte Straßenkappen unterzubringen, die unter einem Deckel einen Hohlraum aufweisen, in dem eine Schlüsselstange endet, welche über eine Kuppelmuffe die Verbindung mit dem weiter im Erdreich angeordneten Absperrorgan für die Leitung herstellt. Über die Auf- und Absperrvorrichtungen bleiben die unterirdischen Leitungen in der Form auch über Jahre zugänglich, so dass beispielsweise im Fall der Anhebung der Straßendecke im Rahmen einer Baumaßnahme die Leitung bzw. das Absperrorgan über die Auf- und Absperrvorrichtung geschlossen bzw. geöffnet werden kann. Solche Vorrichtungen werden darüber hinaus auch dazu benutzt, den Anschluss an im Erdreich verlaufende Rohre zu bewerkstelligen. Hierzu befindet sich an der Unterseite des Schließzylinders der Armatur ein Schneidwerkzeug, das unter Einsatz diverser Abdichtungsmaßnahmen in den Rohrmantel hineingetrieben wird, um die entsprechenden Anschlussmöglichkeiten zu schaffen. Der Bediener kann dabei bisher vom oberen Ende der Auf- und Absperrvorrichtung aus den Öffnungszustand der Armatur nicht erfassen, folglich weiß er nicht, ob und wie weit das Schneidwerkzeug bereits in den Mantel eingedrungen ist. Es ist besonders wichtig, dass der Bediener das Schneidwerkzeug bzw. die entsprechenden Apparaturen nicht zu weit in das Rohr hineintreibt, um die Funktion der Armatur, abzudichten, nicht zu gefährden. Bekannt ist aus der EP 0 702 178 A1 eine Vorrichtung zur Anzeige der Position eines Ventils. Diese umfasst eine vergleichsweise komplizierte und empfindliche Drehvorrichtung mit ineinander greifenden Verzahnungen. Als Verstellelemente dienen ihrerseits auch ineinander greifende Zahnräder. Hier ist aber für jede einzelne Einbaugarnitur die Bestimmung eines Referenzpunktes notwendig, was mit einigem Aufwand und fehlender Präzision verbunden ist. Eine Abstimmung auf die jeweilige Auf- und Absperrvorrichtung ist zwangsläufig notwendig, um diese auf den jeweiligen Schieber einzustellen. Eine andere Vorrichtung ist z. B. aus der DE-GM 203 10 741 bekannt. Die Zeigerwerke übertragen die auf die Schlüsselstange ausgeübte Drehung, so dass der Bediener nachvollziehen kann, wie weit das Absperrorgan geöffnet bzw. geschlossen ist. Zeigerwerke müssen aber auf die jeweilige Auf- und Absperrvorrichtung abgestimmt werden, da deren Drehzahlen in Abhängigkeit von den Umdrehungen des Schiebers stark divergieren. Von daher muss der Bediener bisher jede Vorrichtung in Bezug auf die Zahl der Drehungen zwischen den beiden äußeren Öffnungszuständen einrichten. Hinzu kommt, dass eine Vielzahl von Drehungen der Schlüsselstange notwendig ist, um das Absperrorgan komplett zu öffnen bzw. zu schließen, die Anzeige hierfür ist aber entsprechend ungenau. Der Bediener muss sich stets merken, wie viele Umdrehungen er ausgeführt hat, um dann zu wissen, dass das Absperrorgan - als wichtigstem Zustand - beim Zudrehen komplett geschlossen ist.

Damit stellt sich der vorliegenden Erfindung die Aufgabe, eine Auf- und Absperrvorrichtung zu schaffen, die es für den Bediener auf den ersten Blick und in zuverlässiger Weise ermöglicht, darüber Kenntnis zu erlangen, in welchem Öffnungszustand sich die unterirdische Armatur befindet.

Diese Aufgabe wird dadurch gelöst, dass die Vorrichtung eine Speichervorrichtung zum Speichern der beim Öffnen und/oder Schließen auf die Auf- und Absperrvorrichtung ausgeübten Drehbewegungen aufweist, welche durch drei übereinander und/oder ineinander angeordnete Ringe gebildet ist und zwar einen Drehring, einen Übertragungsring sowie einen Speicherring, wobei der Drehring zur Übertragung der auf die Schlüsselstange ausgeübten Drehmomente dient und verdrehbar und in der Höhe unverstellbar am oberen Ende des Innenrohrs angeordnet ist, wobei der Speicherring auf dem Gewinde bewegbar angeordnet ist und wobei der Übertragungsring zwischen Drehring und Speicherring verdrehsicher und in der Höhe verstellbar derart angeordnet ist, dass die Bewegung des Speicherrings beim Schließen der Auf- und Absperrvorrichtung auf den Drehring übertragen wird.

Es handelt sich dabei um einen Speicher, welcher die Richtung und Anzahl der Drehungen festhält, so dass sich dem Bediener quasi alle Öffnungszustände der Armatur darstellen. Dies geschieht in Abstimmung auf den jeweiligen Einbauzustand und -zweck, so dass der Bediener auch etwaige Defekte oder Störungszustände sofort bemerken kann.

Die Speicherung der Drehungen erfolgt über einen in Zusammenhang mit einem Gewinde stehenden Mechanismus. Deswegen ist vorgesehen, dass die Schlüsselstange von einem mit dieser mitdrehenden Innenrohr sowie einem Hülsrohr umgeben ist, in welchem das Innenrohr drehbar gelagert ist, wobei das Innenrohr ein Außengewinde oder dass das Hülsrohr ein Innengewinde aufweist.

Das Hülsrohr sollte mit einer Verdrehsicherung ausgerüstet sein und dient dabei neben seiner Funktion als äußere Abdichtung, Sicherung gegen Verschmutzung und Schutz zugleich als Stützhülse für das Innenrohr, welches darin drehbar gelagert ist. Art und Umfang der Drehung des Innenrohrs werden dabei letztlich über einen mehrteiligen Speichermechanismus auf die auch nachrüstbare Statusanzeige übertragen.

Eine bevorzugte Ausführungsform der Erfindung sieht dabei vor, dass die Speichervorrichtung durch drei übereinander und/oder ineinander angeordnete Ringe gebildet ist. Diese sind jeweils um das Innenrohr herum positioniert und ihrer jeweiligen Funktion entsprechend verdrehsicher und/oder auf- und abbewegbar angeordnet.

Als oberstes Bauteil umfasst die Speichervorrichtung einen Drehring, der verdrehbar und am oberen Ende des Innenrohrs in der Höhe unverstellbar angeordnet ist. Über diesen Drehring werden die auf die Schlüsselstange ausgeübten Momente übertragen.

Die eigentliche Speicherfunktion wird durch einen auf dem Gewinde bewegbar angeordneten Speicherring realisiert. Bei Drehung der Schlüsselstange und damit auch des Innenrohrs verändert der Speicherring als maßgebliches Bauteil im Zusammenhang mit dem Mechanismus seine Position auf dem Gewinde. Beim Öffnen der Auf- und Absperrvorrichtung bewegt sich der Speicherring nach unten, um dann beim Schließen quasi auf dem Gewinde wieder nach oben zu klettern, bis ab einem bestimmten, im Folgenden noch zu erläuternden Punkt Mechanismen greifen, die dem Benutzer anzeigen, dass die geschlossene Position erreicht ist bzw. ihm über den Öffnungszustand der Auf- und Absperrvorrichtung Auskunft geben.

Alternativ zu dem bewegbar angeordneten Speicherring wird vorgeschlagen, dass die Speichervorrichtung einen verdrehsicher an der Schlüsselstange gelagerten Speicherring aufweist. Der Übertragungsring ist zwischen Dreh- und Speicherring angeordnet.

Die Speichervorrichtung besteht aus einem dritten zentralen Bauteil. Diesbezüglich wird vorgeschlagen, dass die Speichervorrichtung einen Übertragungsring aufweist, welcher die Drehbewegung vom Drehring auf den Speicherring überträgt. Dieser kann bei der Ausführungsform mit dem beweglich angeordneten Speicherring selbst verdrehsicher und in der Höhe verstellbar angeordnet sein. Es versteht sich, dass der Übertragungsring an seinem oberen Ende korrespondierend zu dem Dreh- und an seinem unteren Ende korrespondierend zu dem Speicherring ausgebildet ist. Bei Drehung des oberen Drehrings in Folge der Betätigung der Auf- und Absperrvorrichtung setzt sich der Übertragungsring in Bewegung, und zwar beim Öffnen der Armatur nach unten. Hierbei sind Übertragungs- und Speicherring miteinander verbunden, bis der Übertragungs- schließlich den Speicherring freigibt, so dass dieser auf dem Gewinde abwärts wandern kann. Beim Schließen der Auf- und Absperrvorrichtung finden sich exakt diese Beziehungen und Positionen im umgekehrten Sinn wieder, d. h. Übertragungs- und Speicherring werden wieder miteinander verbunden und wandern dann gemeinsam nach oben, wobei der Drehring aufgrund der Verdrehsicherheit des Übertragungsrings dann selbst eben auch verdrehsicher gehalten ist.

Es ist vorgesehen, dass der Drehring an seiner Außenwandung eine die Reibung reduzierende Oberfläche aufweist. Hierzu können beispielsweise Stege dienen, die vorzugsweise senkrecht zur Drehrichtung, also in axialer Richtung des Drehrings orientiert sind. Dem Drehring kommt die Funktion zu, die entsprechenden Bewegungen der Auf- und Absperrvorrichtung bzw. der Schlüsselstange auf die Statusanzeige zu übertragen. In diesem Sinne ist zu verstehen, dass der Drehring an seinem oberen Ende einen Zapfen aufweist, der mit der Statusanzeige in Eingriff steht.

Die Bewegungen zwischen dem Dreh- und dem Übertragungsring werden vorgegeben, indem zwischen diesen beiden Bauteilen eine Zwangskulisse vorgesehen ist. Es ist daher daran gedacht, dass zur Verschiebung des Übertragungsrings gegenüber dem Drehring eine Zwangskulisse vorgesehen ist, und zwar zweckmäßigerweise eine zweiteilige Zwangskulisse an den Außenseiten der Ringe. Damit soll erreicht werden, dass gewissermaßen die Drehbewegung des Drehrings in eine translatorische Verschiebung des Übertragungsrings und damit auf den Speicherring bewerkstelligt wird. Für das Schließen der Armatur gilt dann der genau umgekehrte Fall, die Längsverschiebung des Übertragungsrings wird auf den oberhalb davon angeordneten Drehring in eine Drehbewegung überführt.

Eine besondere Ausführungsform der Erfindung sieht dabei vor, dass die Zwangskulisse durch eine an der Außenseite des Übertragungsrings vorgesehene, ggf. zweiteilige Führungsbahn und einen dem Drehring an seinem unteren Ende zugeordneten Zapfen gebildet ist. Der Zapfen am unteren Ende des Drehrings ist nach innen positioniert, so dass er korrespondierend zu der Führungsbahn an der Außenseite des Übertragungsrings ausgebildet und angeordnet ist. Diese eine oder mehreren Führungsbahnen an dem Übertragungsring sollten in einem Winkel von etwa 45° verlaufen und an ihren Enden kurze Abschnitte aufweisen, die wiederum in Längsrichtung des Übertragungsrings orientiert sind und die als Anfangs- bzw. Endpunkte der Kulisse dienen. Durch die schräg angeordnete Führungsbahn wird die Drehbewegung des Drehrings in eine translatorische Bewegung überführt und umgekehrt. Die Höhe der Zwangskulisse und damit praktisch die Tiefe des Übertragungsrings sind auf das Gewinde abzustimmen, worauf im Folgenden noch einzugehen sein wird.

Bei der Ausführungsform mit dem fest an der Schlüsselstange angeordneten Speicherring ist vorgesehen, dass die Zwangskulisse durch eine an der Außenseite des Speicherrings vorgesehene Führungsbahn und einen dem Drehring zugeordneten Zapfen gebildet ist.

Die Führungsbahn ist durch eine rundumlaufende Steuerkurve mit alternierend angeordneten Abschnitte gebildet, einer Art Zick-Zack Profil entsprechend. Damit ist ein besonders guter Anzeiger für die Kugelhahnposition geschaffen, denn die Anzeige stellt sich nach Drehung der Schlüsselstange um 90° jeweils um, z.B. von grün auf rot und nach einer weiteren Drehung um 90° wieder von rot auf grün. Dies funktioniert sowohl bei einer kompletten Drehung um 360°, als auch bei einer Drehung um 90°, links oder rechts, da die alternierenden Abschnitte praktisch immer wieder ineinander übergehen. Nach einmaliger Justierung der Anzeige ist der Status der Kugelhahnarmatur auf diese Weise immer wieder eindeutig abzulesen, selbst wenn der Anschlag des Kugelhahns z.B. nach einer Überdrehung defekt ist.

In diesem Sinne ist der Vorschlag zu verstehen, wonach die Abschnitte der Führungsbahn einer Drehung der Schlüsselstange um 90° entsprechend ausgebildet sind. Die Verschiebung des Übertragungsrings erfolgt dabei im Rahmen der vorgegebenen Zwangskulisse.

Zwischen Übertragungs- und Speicherring muss eine Verbindung bestehen, die einerseits den Anforderungen Genüge trägt, dass der Speicherring rechtzeitig freigegeben wird, um auf dem Gewinde auf- und abwandern zu können und andererseits gewährleistet, dass es auch zur Übertragung der Drehkräfte kommen kann. Dies ist auf besonders geeignete Weise der Fall, wenn Übertragungsring und Speicherring über eine Rastverbindung miteinander verbindbar sind. Diese Rastverbindung gewährleistet einerseits die zuverlässige Verbindung und andererseits aber auch ein möglichst leichtes Lösen des Drehrings vom Verbindungsring, wenn sich der erst- vom letztgenannten verselbständigt.

Ergänzt wird diese Rastverbindung dadurch, dass der Übertragungsring an seinem unteren Ende einen Anschlag aufweist, der gewährleistet, dass sich Übertragungs- und Speicherring nicht ineinander schieben, sondern dass vielmehr der Drehring mit seiner Oberseite an der Unterseite des Übertragungsrings anschlägt und dabei zugleich die Rastverbindung eingeht.

In Hinblick auf die Rastverbindung ist vorgesehen, dass das Hülsrohr an seiner Innenseite einen Vorsprung aufweist, welcher gegenüber der Rastverbindung zwischen Übertragungsring und Speicherring angeordnet ist. Da sich Übertragungs- und Speicherring gemeinsam, nämlich in der Raststellung, auf- und abbewegen und dabei eine gewisse Strecke zurücklegen, erfolgt über den lang gezogenen Vorsprung an der Innenseite des Hülsrohr eine Absicherung dieser Rastverbindung. Damit wird gewährleistet, dass die Rastverbindung zumindest solange besteht, bis sich der Übertragungsring nach Lösen der Rastverbindung alleine nach oben schiebt. Dabei bewirken eine oder mehrere Rastnasen an Übertragungs- und Drehring, dass letzterer entsprechend mitgenommen wird, denn die Wirkung des mittleren Übertragungsrings erschöpft sich ja in erster Linie in dem Auf- und Absteigen auf dem Gewinde, ohne dabei selbst mitzudrehen. Die Rastnasen zwischen Übertragungs- und Speicherring lösen sich also quasi ab, der Vorsprung dient für den endgültigen Formschluss bzw. verhindert die Entrastung, indem der Übertragungsring unter dem Vorsprung eingreift und festgehalten wird.

Ergänzend hierzu ist vorgesehen, dass das Hülsrohr unterhalb des Vorsprungs seitliche Ausnehmungen aufweist, in welche die Rastnasen ausweichen können, wenn die Rastverbindung aufgehoben werden soll, damit sich der Speicher- unabhängig von dem Übertragungsring auf dem Gewinde des Innenrohrs zur Speicherung der Drehbewegungen bewegen kann.

Weiterhin ist daran gedacht, dass am oberen Ende des Gewindes ein Freistich vorgesehen ist und dass das Innenrohr oberhalb des Freistichs eine Federung aufweist. Dieser Federlappen gewährleistet, dass bei einer Drehung der Auf- und Absperrvorrichtung in Öffnungsrichtung tatsächlich der Übertragungsring den Weg in die Bahn über das Gewinde findet, wozu der Übertragungsring an seiner Innenseite einen Vorsprung aufweisen sollte, der korrespondierend zu dem Gewinde ausgebildet ist. Der Federlappen führt dazu, dass sich der Vorsprung im Freistich dreht, bis die Auf- und Absperrvorrichtung endgültig verschlossen ist, was der Bediener ja merkt. Beim Öffnen der Auf- und Absperrvorrichtung muss der Vorsprung dem Gewinde zwangsweise folgen, sprich in dieses einfädeln. Damit ist die Auf- und Absperrvorrichtung dann auf den jeweiligen Drehschieber eingerichtet. Beim Aufdrehen der Auf- und Absperrvorrichtung wird über die Speichervorrichtung die konkrete Speicherung ausgelöst, weil sich auf dem Gewinde die Anzahl der Drehungen abspeichert. Es ist also immer wieder dieselbe Drehzahl zum Öffnen bzw. Schließen der Auf- und Absperrvorrichtung erforderlich. Hierzu ist am besten ein Grobgewinde im oberen Bereich des Innenrohrs vorzugesehen. Dies ist insbesondere wichtig in Hinblick auf die Vermeidung von Druckschlägen beim zu schnellen Verschließen der Armatur. Höhe bzw. Steigung sollten dem Bereich entsprechen, in dem langsam geschlossen werden muss. Die Übertragung der Drehbewegungen geschieht also hier nur noch über ein grob ausgebildetes Gewinde, was sich dem Benutzer natürlich aufgrund der Veränderung bei der Drehung erschließt. Dabei handelt es sich beispielsweise um die letzten vier Umdrehungen, dies ist aber abhängig von der jeweiligen Leitung. Wichtig ist dabei, dass sich die Statusanzeige in dem Moment in Bewegung zu setzen beginnt, indem von unten her gesehen das Grobgewinde erreicht wird. Sie bewegt sich dann eben entsprechend langsamer in Richtung Zustand "geschlossen", aber noch nicht endgültig, was erst beim kompletten Schließen der Armatur erfolgt. Sobald sich hieran etwas ändert, müsste der Benutzer auf einen Defekt aufmerksam gemacht sein. Dies kann z. B. der Fall sein, wenn der Widerstand vor dem Signal "geschlossen" erfolgt. Dies spricht dafür, dass die Leitung blockiert ist, weil sich irgendein Gegenstand verfangen hat. Im umgekehrten Fall könnte die Spindel defekt sein, was sich dann dadurch bemerkbar machen müsste, dass man die Auf- und Absperrvorrichtung durchdrehen kann. Dies musste bisher über Gehör bewerkstelligt werden, so dass nun eine wesentlich präzisere und zuverlässigere Lösung geschaffen ist.

Eine synchronisierte Ausbildung von Grobgewinde und Zwangskulisse ist dahingehend hilfreich, dass die Höhe des Grobgewindes und die Höhe der Zwangskulisse miteinander korrespondieren. Der bevorzugte Winkel dabei ist 45°. Die Zahl der Windungen auf dem Grobgewinde entspricht der Drehzahl beim langsamen Schließen der Armatur, je nachdem wie die Sicherheit bezüglich der Druckstoßvermeidung einzuschätzen ist.

Das Durchdrehen des Speicherrings wird dadurch vermieden, dass dieser an seinem unteren Ende mit einer Federkonstruktion ausgerüstet ist. Damit soll gewährleistet sein, dass die Mechanik auch für den Fall entspannt bleibt, dass der Speicherring tatsächlich bis zum unteren Ende des Innenrohrs gelangen sollte.

Eine bevorzugte Ausführungsform der Erfindung sieht vor, dass die Vorrichtung an ihrem unteren Ende mit einem Anschluss für die Spindel der Leitungsarmatur ausgerüstet ist. Damit werden zwei unterschiedliche Einsatzzwecke abgedeckt. Erst genannter bezieht sich auf eine Einbaugarnitur und den Anschluss an einen Leitungsschieber mittels einer Kupplungsmuffe, mit der die Auf- und Absperrvorrichtung mit dem Leitungsschieber verbunden wird. Zweit genannter Anwendungsfall bezieht sich auf den Anschluss an ein bereits verlegtes Rohr in der Form, dass ein Schneidwerkzeug in den Rohrmantel hineingetrieben wird. Hierzu wird eine Schelle auf das Rohr gesetzt, um eine entsprechende Abdichtung zu erreichen. Anschließend wird das Schneidwerkzeug in den Mantel eingetrieben. Hierzu wird ebenfalls die Auf- und Absperrvorrichtung benutzt, über die das Schneidwerkzeug direkt oder indirekt mit dazwischen liegendem Ventilkörper in den Rohrmantel getrieben wird. Es stellt sich dabei bisher das Problem, dass sich der Punkt, an dem das Schneidwerkzeug den Mantel durchdrungen hat und die Arbeit im Prinzip erledigt ist, nicht feststellen lässt. Es gilt dabei zu vermeiden, dass das Schneidwerkzeug zu weit in das Rohr hineingetrieben wird, so dass der Dreh- bzw. Schneidvorgang entsprechend früh abgebrochen wird, sobald das Schneidwerkzeug den Rohrmantel durchdrungen hat. Auf diesen Vorgang ist die Speicherung bemessen, die Statusanzeige ist also so eingestellt, dass das Durchdringen des Mantelrohrs bzw. der entsprechende Schneidfortschritt auf Grund einer vorgegebenen Zahl von Drehungen angezeigt wird, eine darüber hinausgehende Speicherung ist bei diesem Einsatzzweck entbehrlich.

In Hinblick auf Anforderungen bezüglich Abdichtung gegen Wasser und Schmutz ist daran gedacht, die Statusanzeige mit einer Abdeckung aus einem transparenten Material auszurüsten. Die Lasche mit den Anzeigen für die Öffnungszustände sind dadurch entsprechend gesichert. Ergänzend dazu ist auch die Randkappe an ihrer Unterseite geschlossen ausgebildet.

Die Erfindung zeichnet sich insbesondere dadurch aus, dass eine Auf- und Absperrvorrichtung für im Straßenunterbau verlaufende Leitungen geschaffen ist, die mit einem Drehrichtungsspeicher ausgerüstet ist, der dem Bediener exakt Auskunft darüber vermittelt, in welchem Öffnungszustand sich die Armatur befindet. Die Auf- und Absperrvorrichtung kann besonders leicht und zugleich zuverlässig installiert werden. Hierzu muss der Bediener die einmal geschlossene Armatur lediglich öffnen. Bei der entsprechenden Drehung beginnt die dreiteilige Speichervorrichtung ihre Funktion. Der obere Drehring dreht sich, woraufhin der mittlere Übertragungsring gewissermaßen in das Gewinde einfährt, das dazu eine Federung aufweist und entsprechend nachgiebig ausgebildet ist. Beim weiteren Öffnen der Armatur wird über den unteren Speicherring die Zahl der Drehungen quasi gespeichert, indem der Speicherring auf dem Gewinde des Innenrohrs um die betreffende Anzahl absinkt bzw. beim Schließen wieder aufsteigt oder indem der Übertragungsring die Kulisse überfährt. Es ist stets dieselbe Drehzahl beim Öffnen bzw. Schließen der Armatur erforderlich, so dass es hier nicht zu Bedienfehlern kommen kann. Auch Druckschläge in der Leitung werden auf zuverlässige Weise vermieden, weil über das Grobgewinde beim Schließen der Auf- und Absperrvorrichtung rechtzeitig angezeigt wird, wann die letzten Drehungen fällig sind, also wann die Armatur fast geschlossen ist. Wie viele Drehungen dies konkret sind, hängt von den jeweiligen Vorgaben ab. Sollte es hierbei zu einer Ungereimtheit kommen, kann dies praktisch nur daran liegen, dass ein Fehler in der Leitung vorliegt, auf welchen der Bediener dann entsprechend schnell automatisch aufmerksam wird.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Auf- und Absperrvorrichtung, teilweise im Schnitt,
- Figur 2: eine Explosionsdarstellung einer Randkappe mit Statusanzeige sowie eines Dreh-, eines Übertragungs- und eines Speicherrings,
- Figur 3: ein Hülsrohr in perspektivischer und
- Figur 4: ein Hülsrohr in Seitenansicht,
- Figur 5: einen Drehring,
- Figur 6: einen Übertragungsring in perspektivischer Ansicht,
- Figur 7: einen Übertragungsring in Seitenansicht,
- Figur 8: einen Speicherring in perspektivischer Ansicht,
- Figur 9: einen Speicherring in Seitenansicht,
- Figur 10: ein Innenrohr,
- Figur 11: einen Speicherring mit alternierend angeordneten Abschnitten,
- Figur 12: die Einbaugarnitur im Schnitt in "Zu"-Stellung des Kugelhahnanzeigers,
- Figur 13: die Einbaugarnitur im Schnitt in"Auf"-Stellung des Kugelhahnanzeigers.
- Figur 14: die Statusanzeige mit Abdichtung und
- Figur 15: die Randkappe in Ansicht von unten.

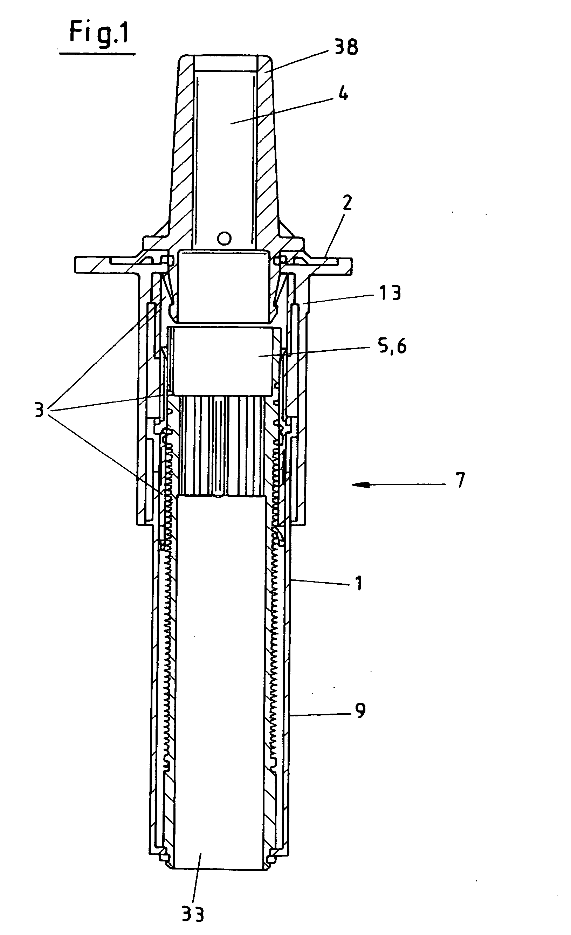

Figur 1 zeigt die als Einbaugarnitur 7 ausgebildete Auf- und Absperrvorrichtung 1 praktisch komplett. Diese besteht neben der Schlüsselstange 4, die an ihrem oberen Ende vom Vierkantschoner 38 umgeben ist und die Statusanzeige 2 aufweist, aus der Randkappe 8, dem Hülsrohr 9 und dem Innenrohr 5. Besonderes Augenmerk wird auf die dreiteilige Speichervorrichtung 3 am oberen Ende 13 des Innenrohrs 5 gerichtet, welche aus Drehring 10, Überlagerungsring 11 und Speicherring 12 besteht, die Speichervorrichtung 3 befindet sich also in der Darstellung gemäß Figur 1 in der oberen Position. Am unteren Ende 33 der Auf- und Absperrvorrichtung 1 befindet sich hier eine Kupplungsmuffe zum Anschluss der Auf- und Absperrvorrichtung 1 an einen Leitungsschieber, beide hier nicht dargestellt.

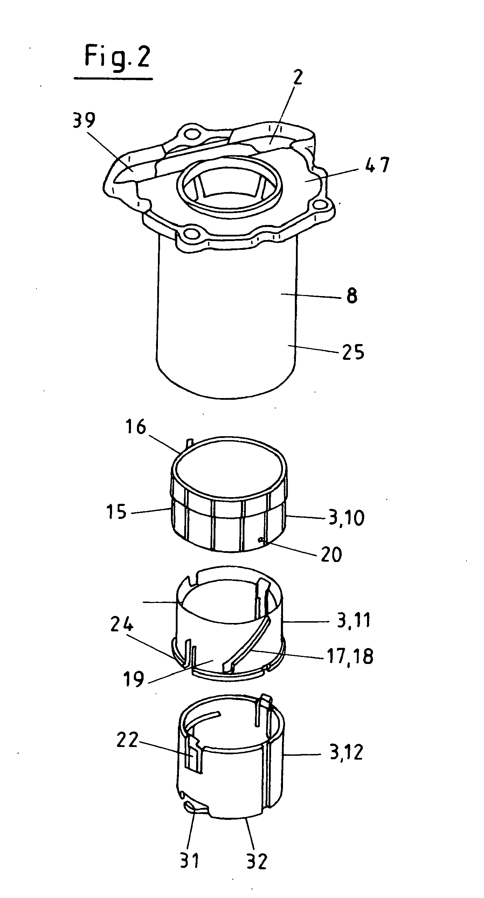

Die Speichervorrichtung 3 ist exakter in Figur 2 gezeigt, und zwar mit den drei Komponenten Drehring 10, Übertragungsring 11 und Speicherring 12 übereinander. Darüber befindet sich die Randkappe 8, an deren Innenseite 25 der hier nicht dargestellte Vorsprung zur Absicherung der Rastverbindung angeordnet ist. Am oberen Ende der Randkappe 8 befindet sich die Statusanzeige 2 als nachrüstbare Baueinheit 47 ausgebildete, hier eine längs verschieblich angeordnete Lasche 39 mit gegebenenfalls farbigen Enden, die den Öffnungszustand der Auf- und Absperrvorrichtung symbolisieren. Der obere Teil der Speichervorrichtung 3 ist durch den Drehring 10 gebildet, der verdrehbar am oberen Ende des Innenrohrs, in der Höhe aber unverstellbar gelagert ist. Darunter befindet sich der Übertragungsring 11 mit der Zwangskulisse 17 an der Außenseite 19 in Form der Führungsbahn 18 und dem unteren Anschlag 24 bezüglich des darunter angeordneten Speicherrings 12. Unterster Teil der Speichervorrichtung 3 ist der Speicherring 12 mit der Federkonstruktion 31 an seinem unteren Ende 32.

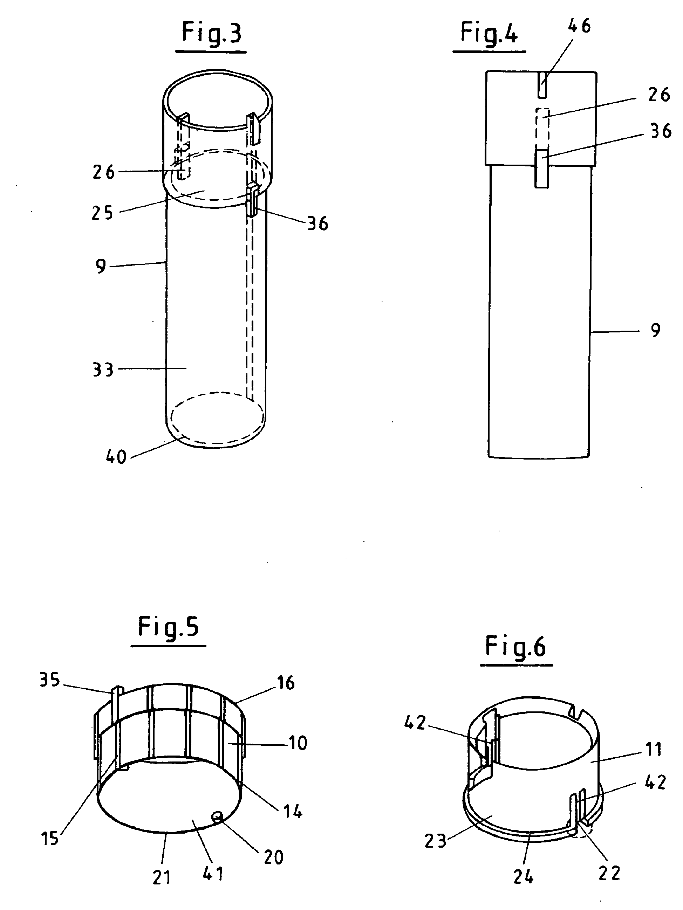

In Figur 3 und 4 ist das Hülsrohr 9 dargestellt, wobei hier vor allen Dingen das Augenmerk auf die Innenseite 25 mit dem Vorsprung 26 gerichtet ist, dieser Vorsprung 26 dient zum Absichern der Rastverbindung zwischen Übertragungs- und Speicherring. Die Rastverbindung zwischen diesen beiden Bauteilen löst sich also gewissermaßen ab, der Vorsprung 26 dient für den endgültigen Formschluss bzw. verhindert andererseits die Entrastung, indem der Übertragungsring unter den Vorsprung 26 eingreift und festgehalten wird. Ergänzend hierzu sind Ausnehmungen 36 zur Aufnahme der Rastnasen des entrasteten Übertragungsrings in dem Hülsrohr 9 vorgesehen. Am unteren Ende 33 der Auf- und Absperrvorrichtung 1 befindet sich noch ein nach innen gerichteter Absatz 40, auf dem das hier nicht dargestellte Innenrohr ruht bzw. dreht. Mit 46 ist die Ausnehmung bezeichnet, eine Montagevertiefung für die Randkappe, die eine sofortige Positionierung der beiden Bauteile zueinander ermöglicht und zugleich als Verdrehsicherung dient.

Von schräg unten ist in Figur 5 der Drehring 10 dargestellt. Dieser weist an seinem oberen Ende 16 einen Zapfen 35 auf, der mit der Statusanzeige zusammenwirkt. Die Drehbewegung der Auf- und Absperrvorrichtung wird dann über den Zapfen 35 auf den Drehring übertragen, Stege 15 dienen dazu, die Reibung an dessen Außenwandung 14 zu erhöhen. Am unteren Ende 21 befindet sich ein weiterer Zapfen 20, und zwar an der Innenseite 41 des Drehrings 10. Dieser ist korrespondierend zu der Führungsbahn in dem Übertragungsring ausgebildet.

Den Übertragungsring 11 zeigt Figur 6, wobei neben dem Anschlag 24 am unteren Ende 23 vor allem die Rastelemente 42, 42' zu erkennen sind, welche die Rastverbindung 22 bewirken.

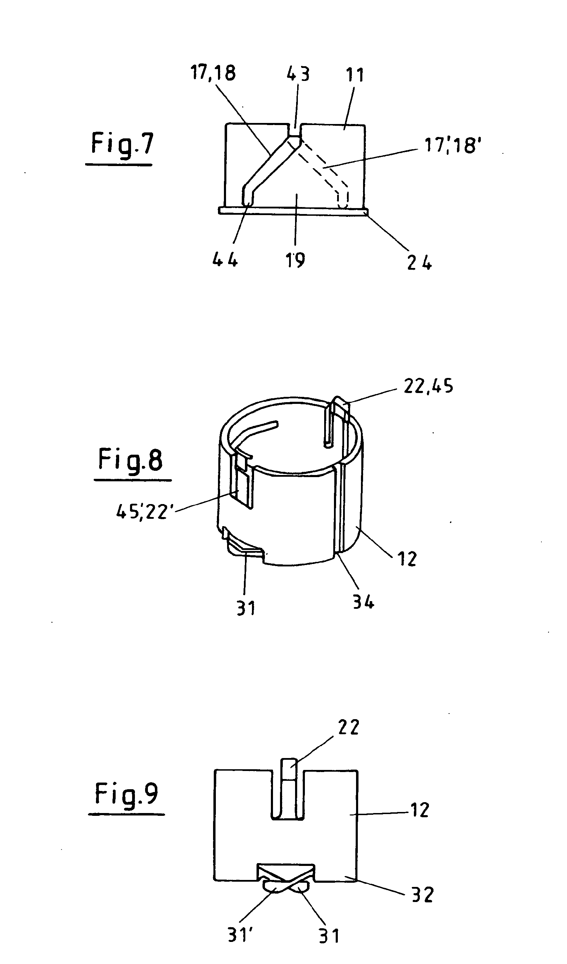

In Figur 7 ist vor allem die Führungsbahn 18 bzw. 18', die die Zwangskulisse 17 bzw. 17' bildet, veranschaulicht. Die Bahnen 18, 18' verlaufen in einem Winkel von ca. 45° und weisen nach oben hin eine abgewinkelte Öffnung 43 auf. Eine solche Abwinklung 44 ist ebenfalls an der Unterseite der Führungsbahn 18 zu erkennen. Diese dienen als Abschluss der Führungsbahn 18.

Einen Speichering 12 zeigt Figur 8, wobei neben der Rastverbindung 22, 22' in Form der Rastelemente 45, 45' besonderes Augenmerk auf der Federkonstruktion 31 am unteren Ende 32 liegt. Letztere gewährleistet eine entspannte Mechanik. Zur Längsführung dient noch die Nut 34.

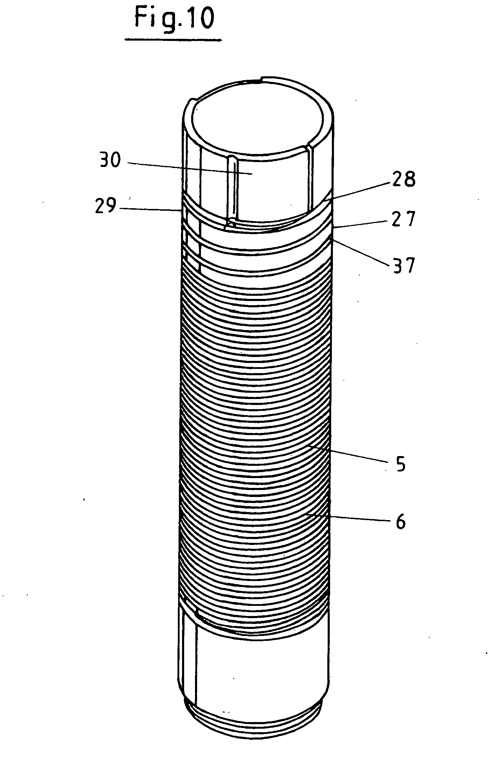

Figur 10 zeigt das Innenrohr 5 mit dem Außengewinde 6, auf dem der hier nicht dargestellte Speicherring sich auf und ab bewegt. Am oberen Bereich 37 des Innenrohrs 5 befindet sich das Grobgewinde 27, das an seinem oberen Ende 29 wiederum mit einem Freistich 28 abschließt. Damit ein sicheres Einfädeln des Übertragungsrings gewährleistet ist, sieht das Innenrohr 5 eine Federung 30 in Form eines Federlappens vor. Das Innenrohr 5 gibt also in diesem Bereich leicht nach, damit das Einfädeln aus dem Freistich 28 in das Grobgewinde 27 gewährleistet ist.

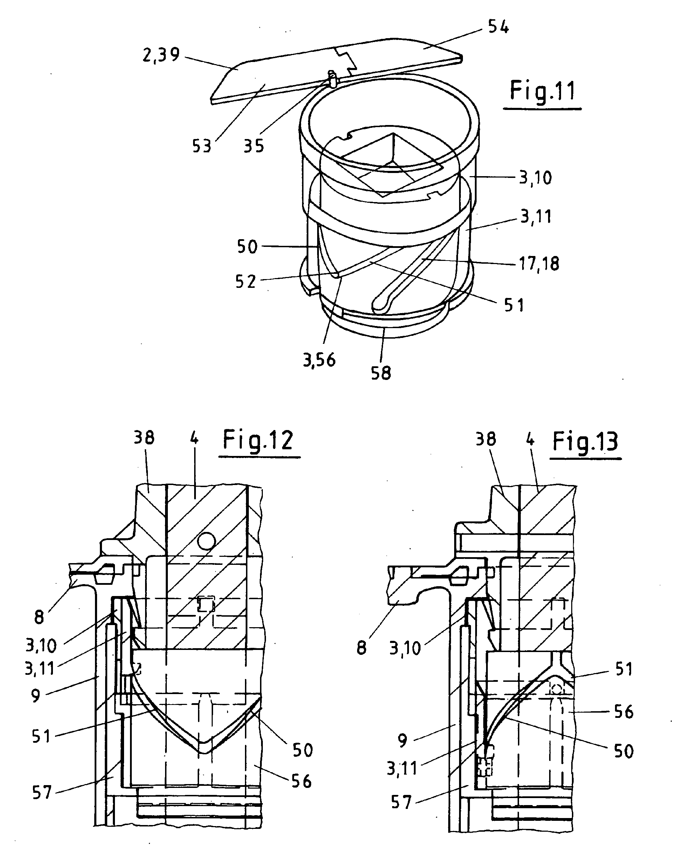

In Figur 11 sind die vier Bauteile Drehring 10, Übertragungsring 11, Speicherring 56 und Statusanzeige 2 dargestellt. Gut zu erkennen ist dabei der Speicherring 56 mit den alternierend angeordneten Abschnitten 50, 51 der als Zwangskulisse 17 ausgebildeten Führungsbahn 18 an der Außenseite 58. Die Abschnitte 50, 51 gehen hier im Bereich des Absatzes 52 einander über und bilden eine Führungsbahn 18 in Art einer Zick-Zack-Bahn für den hier nicht dargestellten Zapfen. Bei Betätigung der hier ebenfalls nicht dargestellten Schlüsselstange dreht sich der Drehring 10, wobei dieses Drehmoment über den Zapfen 35 auf die als Lasche 39 ausgebildete Statusanzeige 2 übertragen wird. Diese weist einen grünen Abschnitt 53 und einen roten Abschnitt 54 auf. Gleichzeitig wird dieses Drehmoment über den Übertragungsring 11 übertragen, welcher sich dann in der Höhe verstellt. Dies gewährleistet die Führungsbahn 18, die Statusanzeige 2 mit den Abschnitten 53 und 54 stellt sich nach Drehung der Schlüsselstange 4 um 90° von grün auf rot, der Abschnitt 54 ist also dann nach außen erkennbar und der Bediener weiß, dass der Kugelhahnposition sich in der geschlossenen Position befindet. Nach einer weiteren Drehung um 90° stellt sich die Statusanzeige 2 von rot auf grün um, der Abschnitt 53 ist also dann erkennbar, worauf sich auf einen geöffneten Kugelhahn schließen lässt.

Die Figur 12 und 13 zeigen den relevanten Ausschnitt einer Einbaugarnitur 1 mit unterschiedlicher Positionierung der Schlüsselstange 4. So zeigt Figur 12 die Einbaugarnitur 1 in der Stellung "Zu". Der Übertragungsring 11 befindet sich dabei im oberen Anschlag an der Führungsbahn 18 des verdrehsicher und in der Höhe nicht gegenüber der Schlüsselstange 4 verstellbaren Speicherrings 56, die Statusanzeige ist auf rot. Mit dem Bezugszeichen 57 ist die Stützhülse versehen, die ihrerseits nicht verdrehbar gelagert ist und für entsprechende Distanz sorgt, um die Funktion von Übertragungsring 11 und Speicherring 56 zu gewährleisten.

In der in Figur 13 gezeigten Darstellung befindet sich der Übertragungsring 11 im unteren Anschlag der Steuerkurve, nach einer 90°-Drehung der Schlüsselstange 4 und nachdem sich der Übertragungsring 11 auf der Führungsbahn 18 des Speicherrings 56 nach unten bewegt hat. In dieser Position befindet sich die Statusanzeige 2 auf grün, um anzuzeigen, dass die Einbaugarnitur nicht geschlossen ist.

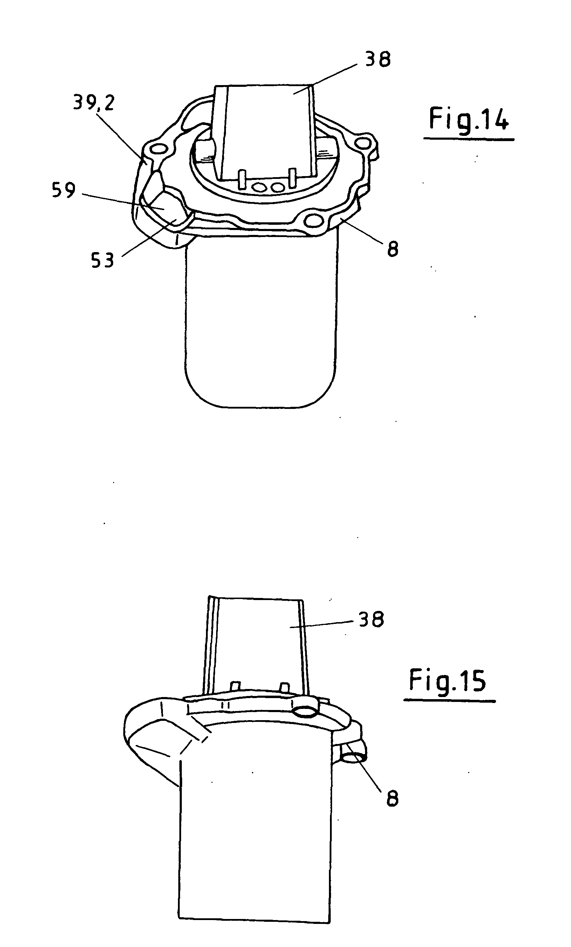

Figur 14 zeigt den oberen Teil der Auf- und Absperrvorrichtung, insbesondere die Statusanzeige 2 in Form der Lasche 39 mit den Abschnitten 53 und 54. Dieser Bereich ist mit der Abdeckung 59 aus einem transparenten Material versehen, um die Anzeige und letztlich die gesamte Auf - und Absperrvorrichtung vor dem Eindringen von Schmutz und Wasser zu schützen.

Eine Ansicht von unten auf die Randkappe 8 zeigt schließlich Figur 15, wo insbesondere dargestellt ist, dass die Randkappe 8 einteilig und somit nach unten geschlossen ausgebildet ist, um auch auf diese Weise das Eindringen von Wasser und Schmutz zu vermeiden.

## Patentansprüche

1. Auf- und Absperrvorrichtung (1) für im Straßenunterbau verlaufende Leitungen, insbesondere Frischwasserleitungen, die über eine Schlüsselstange (4) verfügt, die von einem mit dieser mitdrehenden Innenrohr (5) mit einem Gewinde (6) sowie einem Hülsrohr (9) umgeben ist, in welchem das Innenrohr (5) drehbar gelagert ist und die mit einer Statusanzeige (2) ausgerüstet ist, welche den Öffnungszustand der unterirdischen Leitungsarmatur anzeigt,
**dadurch gekennzeichnet,**
**dass** die Vorrichtung (1) eine Speichervorrichtung (3) zum Speichern der beim Öffnen und/oder Schließen auf die Auf- und Absperrvorrichtung (1) ausgeübten Drehbewegungen aufweist, welche durch drei übereinander und/oder ineinander angeordnete Ringe (10, 11, 12) und zwar einen Drehring (10), einen Übertragungsring (11) sowie einen Speicherring (12) gebildet ist, wobei der Drehring (10) zur Übertragung der auf die Schlüsselstange (4) ausgeübten Drehmomente dient und verdrehbar und in der Höhe unverstellbar am oberen Ende (13) des Innenrohrs (5) angeordnet ist, wobei der Speicherring (12) auf dem Gewinde (6) bewegbar angeordnet ist und wobei der Übertragungsring (11) zwischen Drehring (10) und Speicherring (12) verdrehsicher und in der Höhe verstellbar derart angeordnet ist, dass die Bewegung des Speicherrings (12) beim Schließen der Auf- und Absperrvorrichtung auf den Drehring (10) übertragen wird.

2. Auf- und Absperrvorrichtung nach Anspruch 1,
**dadurch gekennzeichnet,**
**dass** der Drehring (10) an seinem oberen Ende (16) einen Zapfen (35) aufweist, der mit der Statusanzeige (2) in Eingriff steht.

3. Auf- und Absperrvorrichtung nach mindestens einem der vorhergehenden Ansprüche,
**dadurch gekennzeichnet,**
**dass** zwischen Übertragungsring (11) und Drehring (10) eine Zwangskulisse (17) vorgesehen ist.

4. Auf- und Absperrvorrichtung nach Anspruch 3,
**dadurch gekennzeichnet,**
**dass** die Zwangskulisse (17) durch eine an der Außenseite (19) des Übertragungsrings (11) vorgesehene Führungsbahn (18) und einen dem Drehring (10) zugeordneten Zapfen (20) gebildet ist.

5. Auf- und Absperrvorrichtung nach Anspruch 3,
**dadurch gekennzeichnet,**
**dass** die Zwangskulisse (17) durch eine an der Außenseite (58) des Speicherrings (56) vorgesehene Führungsbahn (18) und einen dem Drehring (10) zugeordneten Zapfen gebildet ist.

6. Auf- und Absperrvorrichtung nach Anspruch 5,
**dadurch gekennzeichnet,**
**dass** die Führungsbahn (18) durch eine rundumlaufende Steuerkurve mit alternierend angeordneten Abschnitten (50, 51) gebildet ist.

7. Auf- und Absperrvorrichtung nach Anspruch 6,
**dadurch gekennzeichnet,**
**dass** die Abschnitte (50, 51) der Führungsbahn (18) einer Drehung der Schlüsselstange (4) um 90° entsprechend ausgebildet sind.

8. Auf- und Absperrvorrichtung nach mindestens einem der vorhergehenden Ansprüche,
**dadurch gekennzeichnet,**
**dass** Übertragungsring (11) und Speicherring (12) über eine Rastverbindung (22) miteinander verbindbar sind.

9. Auf- und Absperrvorrichtung nach mindestens einem der vorhergehenden Ansprüche,
**dadurch gekennzeichnet,**
**dass** der Übertragungsring (11) an seinem unteren Ende (23) einen Anschlag (24) aufweist.

10. Auf- und Absperrvorrichtung nach Anspruch 1,
**dadurch gekennzeichnet,**
**dass** das Hülsrohr (9) an seiner Innenseite (25) einen Vorsprung (26) aufweist, welcher gegenüber der Rastverbindung (22) zwischen Übertragungsring (11) und Speicherring (12) angeordnet ist.

11. Auf- und Absperrvorrichtung nach Anspruch 10,
**dadurch gekennzeichnet,**
**dass** das Hülsrohr (9) unterhalb des Vorsprungs (26) seitliche Ausnehmungen (36) aufweist.

12. Auf- und Absperrvorrichtung nach Anspruch 1,
**dadurch gekennzeichnet,**
**dass** am oberen Ende (29) des Gewindes (6) ein Freistich (28) vorgesehen ist.

13. Auf- und Absperrvorrichtung nach Anspruch 12,
**dadurch gekennzeichnet,**
**dass** das Innenrohr (5) oberhalb des Freistichs (28) eine Federung (30) aufweist.

14. Auf- und Absperrvorrichtung nach mindestens einem der Ansprüche 3-13,
**dadurch gekennzeichnet,**
**dass** die Höhe des Gewindes (6) und die Höhe der Zwangskulisse (17) miteinander korrespondieren.

15. Auf- und Absperrvorrichtung nach Anspruch 1,
**dadurch gekennzeichnet,**
**dass** der Speicherring (12) an seinem unteren Ende (32) mit einer Federkonstruktion (31) ausgerüstet ist.

16. Auf- und Absperrvorrichtung nach Anspruch 1,
**dadurch gekennzeichnet,**
**dass** die Vorrichtung (1) an ihrem unteren Ende (33) mit einem Anschluss für die Leitungsarmatur ausgerüstet ist.

17. Auf- und Absperrvorrichtung nach Anspruch 1,
**dadurch gekennzeichnet,**
**dass** die Statusanzeige (2) mit einer Abdeckung (59) aus einem transparenten Material ausgerüstet ist.

## Claims

1. An opening and shut-off device (1) for pipes running in the roadbed, particularly fresh water pipes, which has a key rod (4) surrounded by an internal pipe (5) having a thread (6), which pipe rotates with the rod, as well as a sleeve pipe (9) in which the internal pipe (5) is rotatably mounted and which is equipped with a status indicator (2) which displays the opening state of the underground pipe fitting,
**characterised**
**in that** the device (1) has a storage device (3) for storing the rotational movements exerted onto the opening and shut-off device (1) during opening and/or closing, which storage device is formed by three rings (10, 11, 12) arranged above one another and/or in one another, specifically a rotary ring (10), a transfer ring (11) as well as a storage ring (12), wherein the rotary ring (10) is used for transferring the torques exerted onto the key rod (4) and is arranged at the upper end (13) of the internal pipe (5) such that it can rotate and its height cannot be adjusted, wherein the storage ring (12) is arranged in a movable manner on the thread (6) and wherein the transfer ring (11) is arranged between the rotary ring (10) and storage ring (12) in such a manner that it cannot rotate, it's height can be adjusted and the movement of the storage (12) can be transferred to the rotary ring (10) during the closing of the opening and shut-off device.

2. The opening and shut-off device according to Claim 1,
**characterised**
**in that** the rotary ring (10) has a catch (35) at its upper end (16), which engages with the status indicator (2).

3. The opening and shut-off device according to any one of the preceding claims,
**characterised**
**in that** a positive slotted guide (17) is provided between transfer ring (11) and rotary ring (10).

4. The opening and shut-off device according to Claim 3,
**characterised**
**in that** the positive slotted guide (17) is formed by a guiding path (18) formed on the outside (19) of the transfer ring (11) and a catch (20) assigned to the rotary ring (10).

5. The opening and shut-off device according to Claim 3,
**characterised**
**in that** the positive slotted guide (17) is formed by a guiding path (18) formed on the outside (58) of the storage ring (56) and a catch assigned to the rotary ring (10).

6. The opening and shut-off device according to Claim 5,
**characterised**
**in that** the guiding path (18) is formed by a circumferential control cam with alternately arranged sections (50, 51).

7. The opening and shut-off device according to Claim 6,
**characterised**
**in that** the sections (50, 51) of the guiding path (18) are constructed in accordance with a rotation of the key rod (4) by 90°.

8. The opening and shut-off device according to any one of the preceding claims,
**characterised**
**in that** transfer ring (11) and storage ring (12) can be connected to one another by means of a snap-fit connection (22).

9. The opening and shut-off device according to any one of the preceding claims,
**characterised**
**in that** the transfer ring (11) has a stop (24) at its lower end (23).

10. The opening and shut-off device according to Claim 1,
**characterised**
**in that** the sleeve pipe (9) has a projection (26) on its inner side (25) which is arranged opposite the snap-fit connection (22) between transfer ring (11) and storage ring (12).

11. The opening and shut-off device according to Claim 10,
**characterised**
**in that** the sleeve pipe (9) has lateral recesses (36) below the projection (26).

12. The opening and shut-off device according to Claim 1,
**characterised**
**in that** an undercut (28) is provided at the upper end (29) of the thread (6).

13. The opening and shut-off device according to Claim 12, **characterised**
**in that** the internal pipe (5) has a spring mounting (30) above the undercut (28).

14. The opening and shut-off device according to at least one of Claims 3 - 13, **characterised**
**in that** the height of the thread (6) and the height of the positive slotted guide (17) correspond to one another.

15. The opening and shut-off device according to Claim 1, **characterised**
**in that** the storage ring (12) is equipped with a spring construction (31) at its lower end (32).

16. The opening and shut-off device according to Claim 1, **characterised**
**in that** the device (1) is equipped with a connection for the pipe fitting at its lower end (33).

17. The opening and shut-off device according to Claim 1, **characterised**
**in that** the status indicator (2) is equipped with a cover (59) made of a transparent material.

## Revendications

1. Dispositif d'ouverture et de fermeture (1) pour conduites souterraines routières, en particulier conduites d'eau fraîche, qui dispose d'une tige à clé (4) qui est entourée d'un tube intérieur (5) tournant ensemble avec cette dernière, avec un filetage (6), ainsi qu'un tube à douille (9) dans lequel le tube intérieur (5) est logé de manière rotative et qui est équipé d'un indicateur d'état (2) qui indique l'état d'ouverture de la tuyauterie souterraine, **caractérisé en ce que**
le dispositif (1) présente un dispositif d'enregistrement (3) pour l'enregistrement des mouvements rotatifs accomplis lors de l'ouverture et/ou la fermeture sur le dispositif d'ouverture et de fermeture (1), dispositif d'enregistrement qui est formé par trois bagues (10, 11, 12) disposées l'une au-dessus de l'autre et/ou l'une dans l'autre, à savoir une bague rotative (10), une bague de transmission (11) ainsi qu'une bague d'enregistrement (12), étant donné que la bague rotative (10) sert à la transmission des couples exercés sur la tige à clé (4) et est disposée de manière rotative et de manière non-orientable en hauteur à l'extrémité supérieure (13) du tube intérieur (5), étant donné que la bague d'enregistrement (12) est disposée de manière mobile sur le filetage (6), et étant donné que la bague de transmission (11) est disposée de façon protégée contre la torsion et orientable en hauteur entre la bague rotative (10) et la bague d'enregistrement (12) de manière à ce que le mouvement de la bague d'enregistrement (12) soit transmis à la bague rotative (10) lors de la fermeture du dispositif d'ouverture et de fermeture.

2. Dispositif d'ouverture et de fermeture selon la revendication 1, **caractérisé en ce que**
la bague rotative (10) présente à son extrémité supérieure (16) un tourillon (35) qui est en prise avec l'indicateur d'état (2).

3. Dispositif d'ouverture et de fermeture selon l'une quelconque au moins des revendications précédentes,
**caractérisé en ce que**
une coulisse à guidage forcé (17) est prévue entre la bague de transmission (11) et la bague rotative (10).

4. Dispositif d'ouverture et de fermeture selon la revendication 3,
**caractérisé en ce que**
la coulisse à guidage forcé (17) est formée par une glissière de guidage (18) prévue sur la face extérieure (19) de la bague de transmission (11) et un tourillon (20) affecté à la bague rotative (10).

5. Dispositif d'ouverture et de fermeture selon la revendication 3,
**caractérisé en ce que**
la coulisse à guidage forcé (17) est formée par une glissière de guidage (18) prévue sur la face extérieure (58) de la bague d'enregistrement (56) et un tourillon affecté à la bague rotative (10).

6. Dispositif d'ouverture et de fermeture selon la revendication 5,
**caractérisé en ce que**
la glissière de guidage (18) est formée par une courbe de commande circonférentielle avec sections alternantes (50, 51).

7. Dispositif d'ouverture et de fermeture selon la revendication 6,
**caractérisé en ce que**
les sections (50, 51) de la glissière de guidage (18) sont formées conformément à une rotation de 90° de la tige à clé (4).

8. Dispositif d'ouverture et de fermeture selon l'une quelconque au moins des revendications précédentes,
**caractérisé en ce que**
la bague de transmission (11) et la bague d'enregistrement (12) peuvent être reliées l'une à l'autre via lien à crans (22).

9. Dispositif d'ouverture et de fermeture selon l'une quelconque au moins des revendications précédentes,
**caractérisé en ce que**
la bague de transmission (11) présente à son extrémité inférieure (23) une butée (24).

10. Dispositif d'ouverture et de fermeture selon la revendication 1,
**caractérisé en ce que**
le tube à douille (9) présente à sa face intérieure (25) une projection (26) qui est disposée en face du lien à crans (22) entre la bague de transmission (11) et la bague d'enregistrement (12).

11. Dispositif d'ouverture et de fermeture selon la revendication 10,
**caractérisé en ce que**
le tube à douille (9) présente au-dessous de la projection (26) des encoches latérales (36).

12. Dispositif d'ouverture et de fermeture selon la revendication 1,
**caractérisé en ce que**
une gorge de dégagement (28) est prévue à l'extrémité supérieure (29) du filetage (6).

13. Dispositif d'ouverture et de fermeture selon la revendication 12,
**caractérisé en ce que**
le tube intérieur (5) présente une suspension à ressort (30) au-dessus de la gorge de dégagement (28).

14. Dispositif d'ouverture et de fermeture selon l'une quelconque au moins des revendications 3-13,
**caractérisé en ce que**
la hauteur du filetage (6) et la hauteur de la coulisse à guidage forcé (17) correspondent l'une à l'autre.

15. Dispositif d'ouverture et de fermeture selon la revendication 1,
**caractérisé en ce que**
la bague d'enregistrement (12) est équipée à son extrémité inférieure (32) d'une construction à ressort (31).

16. Dispositif d'ouverture et de fermeture selon la revendication 1,
**caractérisé en ce que**
le dispositif (1) est équipé à son extrémité inférieure (33) d'un raccord pour la tuyauterie.

17. Dispositif d'ouverture et de fermeture selon la revendication 1,
**caractérisé en ce que**
l'indicateur d'état (2) est équipé d'un couvercle (59) en un matériau transparent.
